# EUROPÄISCHE PATENTSCHRIFT

(11) **EP 1 024 920 B1**
(45) Veröffentlichungstag und Bekanntmachung des Hinweises auf die Patenterteilung: **14.05.2003**
(21) Anmeldenummer: 98947228.7
(22) Anmeldetag: 09.10.1998
(51) Int. Cl.: B23K 26/08, C23F 1/00, B27N 3/24, B44C 3/00, C21D 9/50

(54) **ENDLOSES STAHLBAND FÜR DOPPELBANDPRESSEN UND VERFAHREN ZUR HERSTELLUNG DESSELBEN**
CONTINUOUS STEEL STRIP FOR TWIN PRESSES AND METHOD FOR PRODUCING THE SAME
BANDE EN ACIER SANS FIN POUR PRESSES A DOUBLE BANDE ET SON PROCEDE DE PRODUCTION

(30) Priorität: 14.10.1997 AT 173997
(43) Veröffentlichungstag der Anmeldung: 09.08.2000
(73) Patentinhaber: Berndorf Band Gesellschaft m.b.H., 2560 Berndorf (AT)
(72) Erfinder: STADLER, Otto, A-2560 Hernstein (AT); SCHUSTER, Roland, A-2560 Berndorf (AT)
(74) Vertreter: Widtmann, Georg, Dipl.-Ing. Dr. techn.
(86) Internationale Anmeldenummer: AT9800238
(87) Internationale Veröffentlichungsnummer: WO99019109

(56) Entgegenhaltungen:
- EP-A- 0 031 613
- EP-A- 0 481 378
- EP-A- 0 536 625
- DE-A- 3 337 962
- US-A- 3 884 749
- US-A- 4 021 906
- PATENT ABSTRACTS OF JAPAN vol. 006, no. 026 (M-112), 16. Februar 1982 & JP 56 144138 A (NOZAWA:KK), 10. November 1981

## Beschreibung

Die Erfindung hat ein endloses Stahlband, insbesondere aus austenitischem und/oder martensitischem Stahl, mit zumindest einer Schweißnaht für Doppelbandpressen zum Gegenstand und bezieht sich auf ein Verfahren zur Oberflächenstrukturierung eines derartigen endlosen Stahlbandes.

Bei der Herstellung von flächigem Material, sei es oberflächenbeschichteten Spanplatten, Dekorplatten, beispielsweise aus Melaminharzen, dicker ausgebildeten Kunststoffbahnen aus Polyacryl oder Polycarbonaten, besteht die Möglichkeit, die erwünschte Oberflächenbeschaffenheit aber auch die Verbindung der einzelnen Schichten untereinander durch Pressen, insbesondere Heißpressen, zu erreichen. Hierbei ist es bekannt. Pressen mit einer oberen und unteren Preßplatte einzusetzen. Zumindest eine der Preßplatten weist die erwünschte Oberflächenbeschaffenheit auf. Um eine Steigerung der Produktivität einer Presse zu erreichen, sind sogenannte Etagenpressen entwickelt worden, wobei mehrere Preßplatten übereinander angeordnet sind und der Zwischenraum zwischen den Preßplatten jeweils zur Aufnahme des zu pressenden Gutes dient. Dabei wird mit einem Preßvorgang eine höhere Anzahl von Platten gebildet.

Die Oberflächenbeschaffenheit der Preßplatten kann unterschiedlich ausgebildet sein. So besteht die Möglichkeit, die Preßplatten hochglanzpoliert auszubilden, so daß das zu erzeugende Produkt eine vollkommen plane Oberfläche erhält. Für bestimmte Fälle ist eine Strukturierung der Oberfläche erwünscht. So kann beispielsweise die Strukturierung einer Holzfläche oder auch anderer Naturprodukte oder künstlicher Zeichnungen angestrebt werden. Hierzu ist es bekannt, in Analogie zur Herstellung von Offsetdruckplatten auf der Oberfläche eine lichtempfindliche Schichte aufzubringen, die sodann belichtet wird. Je nach dem eingesetzten Verfahren sind sodann die belichteten oder unbelichteten Bereiche gegenüber einem Ätzmittel inert oder empfindlich, so daß das darunter befindliche Material entsprechend der Belichtung geätzt werden kann. Mit einem derartigen Verfahren können beliebige natürliche und/oder künstliche Strukturen, u. zw. dreidimensional an der Preßoberfläche einer Preßplatte vorgesehen werden.

Ein weiteres Verfahren zur Strukturierung von Preßplattenoberflächen wird in der EP-0 536 625-A1 beschrieben. Die Arbeitsflächen von Formen aber auch Preßplatten können mit einem kontinuierlichen oder gepulsten Laserstrahl unterschiedlich abgetragen werden. Um ein möglichst naturgetreues Muster zu erhalten, wird die Bewegung des Laserstrahles über die Werkstückoberfläche über einen Computer gemeinsam mit einem Zufallsgenerator durchgeführt. Die erwünschte Oberfläche soll einen lederartigen Charakter in den abzuformenden Kunststoffartikeln bewirken. Eine derartige Oberfläche ist auch für Prothesen, die in das tierische oder menschliche Gewebe integriert werden sollen, erwünscht.

Zur Steigerung der Produktqualität als auch der Produktivität sind sogenannte Doppelbandpressen entwickelt worden, wobei ein oberes und unteres endloses Band, insbesondere Stahlbänder, vorgesehen sind, die in der Regel mit gleicher Geschwindigkeit und gleicher Richtung eine Egalisierung eines Materialstromes, der in einen planparallen Spalt zwischen den beiden endlosen Bändern eingebracht wird, bewirken. Eine derartige Doppelbandpresse ist beispielsweise in der US-3 884 749-A beschrieben. Da endlose Bänder in der erforderlichen Dicke und Flexibilität und auch Gesamterstreckung wirtschaftlich nicht erzeugt werden können, wird bei der Herstellung derartiger Bänder so verfahren, daß einzelne Bandtafeln und/oder ihre Enden mit einer Dicke von 1 mm bis 3 mm miteinander verschweißt werden. In Querrichtung sind Schweißnähte jedenfalls erforderlich, wohingegen in Längsrichtung, falls erforderlich, auch derartige Schweißnähte vorgesehen sein können. Auch besteht die Möglichkeit, daß schadhafte Stellen durch Einschweißen von Ronden od. dgl. ersetzt werden können. Bei der Erzeugung einer vollkommen planen Fläche, welche poliert oder geschliffen ist, stellen die Schweißnähte in der Regel keine Inhomogenitätsstellen dar.

Daß Schweißnähte gegenüber korrosiven Agenzien andere Eigenschaften aufweisen als das Grundmaterial, selbst wenn eine idente chemische Zusammensetzung vorliegt, ist hinläufig bekannt. Bei Schweißnähten, die mit Zusatzwerkstoffen realisiert werden, liegen drei Zonen vor, die unterschiedliche Eigenschaften aufweisen, u. zw. der niedergeschmolzene Schweißzusatzwerkstoff, der Einbrand, also das während des Schweißens niedergeschmolzene zu schweißende Material sowie die wärmebeeinflußten Zonen. Bei der Durchführung von Ätzungen von nahtlosen Stahlbändern bewirken die Schweißnähte Inhomogenitätsstellen, welche das Aussehen des zu erzeugenden Produktes beeinträchtigt.

Um die oben angeführten Nachteile zu vermeiden, wurde bereits gemäß der DE-33 37 962-C2 vorgeschlagen, auf einem Endlosband ein elektrisch nicht leitendes Designbild mit erhabenen und tieferliegenden metallblanken Stellen aufzutragen und anschließend elektrolytisch Metall abzuscheiden. Ein derartiges Verfahren erlaubt zwar die Abdeckung von Schweißnähten, jedoch wird ein inhomogenes Band erhalten, da in der Regel das abzuscheidende Material nicht mit dem des Trägermaterials ident ist, sondern in der Regel weicher ausgebildet ist. Somit besteht die Gefahr, daß derartige Beschichtungen während des Gebrauchs von der Oberfläche abgesprengt werden. Die äußerste Schichte eines Bandes, welches umgelenkt wird, unterliegt den extremsten Beanspruchungen und weiters ist, wie ausgeführt, in der Regel eine deratige Beschichtung weicher als das Stahlband, so daß die Einsatzdauer gegenüber einem normalen Stahlband wesentlich geringer ist.

In der EP-0 031 613-B1, von welchem Stand der Technik die vorliegende Erfindung ausgeht, wird ein weiteres Verfahren zur Herstellung einer Prägegravur auf einem Endlosband beschrieben, wobei das Endlosband mit einer galvanisch aufgebrachten Metallschichte versehen wird, worauf der Ätzvorgang durchgeführt wird. Mit einer derartigen Verfahrensweise kann zwar erreicht werden, daß die Schweißnaht keine Beeinträchtigung des zu erzeugenden Gutes bewirkt, jedoch ist auch hier in der Regel die aufgebrachte Metallschicht. z. B. Kupfer, weicher als die darunter befindliche Trägerschichte aus Stahl und weiters besteht die Gefahr, daß die Oberflächenschichte, welche den größten Änderungen in Druck- und Zugspannungen unterliegt, zumindest teilweise abgesprengt wird, so daß unerwünschte Inhomogenitatsstellen bedingt werden.

Der vorliegenden Erfindung ist zum Ziel gesetzt, ein endloses Stahlband zu schaffen, bei welchem Schweißnähte sowohl für gefinishte Oberflächen als auch strukturierte Oberflächen keine optischen Inhomogenitätsstellen sind, wobei weiters die Arbeitsflächen im wesentlichen analoge Eigenschaften, z. B. Härte, wie das darunter befindliche Stahlband besitzen und die Oberflächenstrukturen eine größere Homogenität und einen im wesentlichen optisch kontinuierlichen Übergang zu dem Restbereich des Stahlbandes, bezogen auf den Querschnitt desselben, besitzen.

Das erfindungsgemäße endlose Stahlband, insbesondere aus austenitischem und/oder martensitischem Stahl, mit zumindest einer Schweißnaht, die quer zur Längserstreckung des Stahlbandes verläuft, für Doppelbandpressen mit zumindest einer ersten, sich vorzugsweise im wesentlichen über das gesamte Stahlband erstreckenden, Oberflächenschichte, welche eine unterschiedliche Zusammensetzung gegenüber einer zwischen der ersten und einer zweiten dieser gegenüberliegenden Oberfläche sich im wesentlichen über das gesamte Stahlband erstreckende Zwischenschichte aufweist, besteht im wesentlichen darin, daß die erste Oberflächenschichte aus dem Stahl des Stahlbandes gebildet ist und insbesondere regelmäßig, nebeneinanderliegende und/oder einander überschneidende wärmebeeinflußte Bereiche, z. B. Zonen und/oder Einbrandbereiche, z. B. Zonen, aufweist. Dadurch, daß die erste Oberflächenschichte aus dem Stahl des Stahlbandes gebildet ist, können materialmäßige Diskontinuitäten, zumindest in Hinsicht auf die chemische Zusammensetzung, vermieden werden, womit keine Oberflächenbereiche gebildet werden, die beispielsweise auf Grund unterschiedlicher Zug- und Druckbeanspruchungen abgesprengt werden können. Durch die z. B. regelmäßig nebeneinanderliegenden und/oder einander überschneidenden wärmebeeinflußten Bereiche oder Zonen und/oder Einbrandbereiche oder Zonen wird an der Oberfläche eine nicht nur chemische, sondern auch physikalische, im wesentlichen idente, Struktur erreicht, die somit auch nach korrosiven Beanspruchungen, wie beispielsweise einem Ätzvorgang, ein homogenes Verhalten aufweisen können oder optisch eine homogene Ausbildung erscheinen lassen.

Nach ihrem Gefüge im fertig warmbehandelten Zustand werden die Stähle in ferritische, martensitische und austenitische Stähle eingeteilt. Bei vielen Stählen können zwei oder drei Gefügeformen gleichzeitig auftreten. Man spricht dann z. B. von austenitischmartensitischen oder ferritisch-austenitischen Stählen. Das Maurer-Diagramm gibt die schematische Einteilung der CrNi-Stähle wieder. Dabei ist zu beachten, daß dieses Diagramm für CrNi-Stähle mit einem C-Gehalt von 0,1 - 0,5 % C gilt. Durch Wärmebehandlung, Kaltverformung sowie Zulegierung von weiteren Legierungselementen können die Grenzen verschoben werden.

Austenitische CrNi-Stähle, welche für die chemische Verfahrenstechnik von außerordentlicher Bedeutung sind, können unterteilt werden in CrNi- und CrNiMo-Stähle mit je etwa 18 % Cr und in Sonderstähle mit Chromgehalten zwischen etwa 12 und 25 % und weiteren Legierungszusätzen. Der erste Vertreter dieser Gruppe war der 1912 auf den Markt gebrachte Stahl, ursprünglich 0,25 % C, 18 % Cr, 8 % Ni. Hinsichtlich des C-Gehaltes haben sich vier Grade eingebürgert:
a) Extrem niedriger C-Gehalt (<0,03 %)
b) Reduzierter C-Gehalt (<0,07 %)
c) Ein C-Gehalt bis zu 0,10 %, der aber für die schweißbaren Sorten weitgehend durch Zusätze, wie Ti, Ta, Nb, zu Sondercarbiden abgebunden (stabilisiert) wird, um die Neigung zur interkristallinen Korrosion zu unterbinden.
d) Für die nicht zur Schweißung (ohne nachträgliche Wärmebehandlung) vorgesehenen Güten wird der C-Gehalt bei CrNi-Austenitstählen bis zu 0,15 % erhöht.

Obige %-Angaben sind in Gew.-%.

Erstrecken sich die wärmebeeinflußten Bereiche bzw. die Einbrandbereiche zwischen einem Zehntel bis zur Hälfte der Dicke des Stahlbandes, so ist sowohl dem Erfordernis der Festigkeit des Stahlbandes als auch der Tiefe für zu ätzende Strukturen unter Berücksichtigung eines geringen Materialeinsatzes besonders vorteilhaft Rechnung getragen.

Eine raummäßig ausgebildete Arbeitsfläche des endlosen Stahlbandes liegt dann vor, wenn die Schichtdicken der wärmebeeinflußten Bereiche und/oder Einbrandbereiche, bezogen auf die durchlaufende zweite Oberfläche, variierend ist, wodurch eine Strukturierung, z. B. einer Holzmaserung, gebildet ist.

Ist die erste Oberflächenschichte ausschließlich durch wärmebeeinflußte Bereiche und/oder Einbrandbereiche gebildet, so können auch bei besonders aggressiven Ätzmitteln Inhomogenitäten bezüglich der Korrosionsbeständigkeit bzw. Ätzfähigkeit vermieden werden.

Ist die Schweißnaht aus dem Material des Stahlbandes und frei von Zusatzschweißwerkstoffen aufgebaut, so ist auf besonders einfache Weise jegliche chemische Inhomogenität der Schweißnaht gegenüber den weiteren Oberflächenbereichen vermieden.

Das erfindungagemäße Verfahren zur Oberflächenstrukturierung eines endlosen, insbesondere austenitischen und/oder martensitisehen, Stahlbandes, wobei die Enden eines Stahlbandes durch ein Verbindungsschweißen miteinander verbunden werden und eine erste eben erstreckbare Oberflächenschichte, die sich vorzugsweise im wesentlichen über das gesamte Stahlband erstreckt, mit einer unterschiedlichen Zusammensetzung gegenüber einer sich über das gesamte Stahlband erstreckenden Zwischenschichte, die zwischen der ersten und einer zweiten der ersten gegenüberliegenden sich ebenfalls im wesentlichen über das gesamte Stahlband erstreckenden Oberflächenschichte gebildet wird, wobei die erste anschließend zumindest teilweise abgetragen wird, besteht im wesentlichen darin, daß insbesondere nach dem Verbindungsschweißen der Enden die erste sich im wesentlichen eben erstreckbare Oberflächenschichte einer, insbesondere einer Schweißung entsprechenden, Wärmebeaufschlagung mit einer zum Stahlband, z. B. zeilenförmig, relativbewegten Wärmebehandlungseinrichtung, insbesondere Schweißeinrichtung, unterzogen wird. Bei der Anfertigung der Schweißnaht vor der Oberflächenbehandlung kann die Wärmebeaufschlagung zeilenförmig od. dgl. erfolgen, ohne die Orientierung der Verbindungsschweißnaht zu berücksichtigen. Es kann durch dieses Verfahren eine optisch einheitliche Oberflächenstrukturierung erreicht werden. Wird die Schweißung der Enden erst nach der wärmemäßigen Oberflächenbehandlung durchgeführt, so soll die Schweißnaht parallel zur zonen- bzw. zeilenförmigen Wärmebehandlung erfolgen. Mit diesem Verfahren kann eine im wesentlichen homogene Oberfläche erreicht werden, wobei gleichzeitig auch eine Homogenisierung des Querschnittes des Stahlbandes erreicht werden kann. Als Wärmebehandlungseinrichtung können beispielsweise Schweißeinrichtungen, wie Elektronenstrahlschweißeinrichtung, IR-Strahler, genannt werden.

Erfolgt die Wärmebeaufschlagung und vorzugsweise die Schweißung mit einem Laser, insbesondere einem Nd-Yag Laser, so kann bei der Schweißung die Wärmeeinbringung auf Grund der möglichen hohen Energiedichte besonders gut gesteuert werden, wobei die Wärmebeaufschlagung besonders gezielt in analoger Vorgangsweise zur Verbindungsschweißung erfolgen kann. Ein derartiger Laser ist in seiner Bedienung besonders einfach, wobei weiters eine besonders hohe Betriebssicherheit, gleichgültig, ob der Laser gepulst oder kontinuierlich eingesetzt wird, gegeben ist.

Wird die Schweißung mit einer höheren Energiedichte pro Flächeneinheit als die Wärmebeaufschlagung zur Bildung der wärmebeeinflußten Bereiche und/oder Einbrandbereiche durchgeführt, so kann beispielsweise durch andere Fokusierung des zur Schweißung eingesetzten Lasers eine wesentlich raschere Wärmebeaufschlagung des gesamten Stahlbandes erreicht werden.

Wird die Wärmebeaufschlagung mäanderförmig quer zur Längsrichtung des Stahlbandes durchgeführt, so kann die Wärmebehandlung, beispielsweise parallel zu einer querorientierten Verbindungsschweißnaht der Enden, durchgeführt werden, wobei eine kontinuierliche Wärmebehandlung des gesamten Stahlbandes in gleichförmiger Art erfolgt.

Wird das Stahlband geschweißt, wärmebeaufsehlagt und anschließend wärmebehandelt, insbesondere lösungsgeglüht, so kann ein besonders gleichmäßiges Gefüge des Stahlbandes erreicht werden, wobei die erwünschte Elastizität und Härte, je nach Stahlband, eingestellt werden kann.

Wird das Stahlband oberflächenbehandelt, insbesondere geschliffen, anschließend geschweißt, sodann die Schweißnaht mechanisch nachgearbeitet und anschließend poliert, worauf die Wärmebeaufschlagung durchgeführt wird, so kann die Schweißnaht besonders wirksam mit der restlichen Oberfläche egalisiert werden.

Im folgenden wird die Erfindung anhand der Zeichnungen und Beispiele näher erläutert.

Es zeigen:
Fig. 1 ein endloses Band in perspektivischer Darstellung mit einer Laserschweißeinrichtung.
Fig. 2 einen Teilausschnitt des Bandes und
Fig. 3 einen Teilausschnitt des Bandes gemäß Fig. 2 nach Ätzung des Bandes.

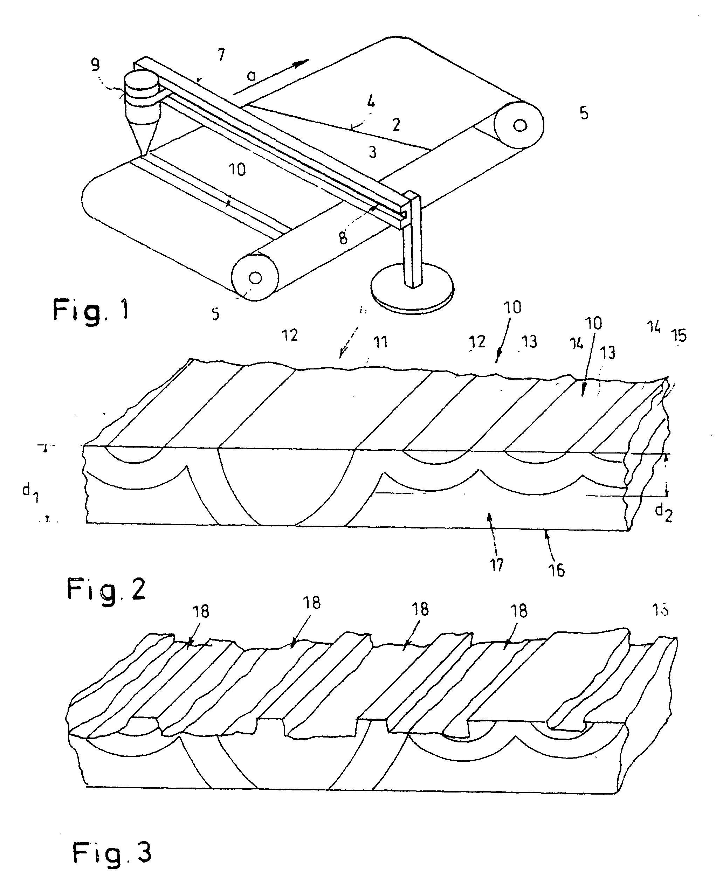

In Fig. 1 ist ein Stahlband dargestellt, dessen beide Enden 2 und 3 über eine Schweißnaht 4, die quer zur Längserstreckung a des Stahlbandes verläuft, miteinander verbunden sind. Das Stahlband ist flexibel und wird über die Trommeln 5, die in einem nicht abgebildeten Gestell gelagert und angetrieben sind, umgelenkt und angetrieben. Über dem Band ist ein Träger 7 angeordnet, der sich quer über das Band erstreckt. Im Träger 7 ist eine Führung 8 vorgesehen, entlang welcher ein Laserschweißgerät 9 hin- und herbewegt. z. B. über einen nicht dargestellten E-Motor mit Zahnstange, werden kann. Das Laserschweißgerät führt eine mäanderförmige Relativbewegung zum Band aus, wobei die Zonen oder Bereiche 10 unterschiedlich figuriert sein können. Bei schrittweiser Bewegung des Stahlbandes 1 kann die Führung normal zur Längserstreekung a angeordnet sein, wobei jeweils beim Stillstand des Bandes eine Spur normal zur Längserstreckung gelegt wird. Eine weitere Möglichkeit besteht darin, daß das Band mit außerordentlicher geringer Geschwindigkeit bewegt wird, so daß entweder bei schräggeneigtem Träger 7 erneut eine normale Zone 10 erwärmt wird oder z. B. bei normal zur Längserstreckung des Bandes angeordnetem Träger eine mit der Längserstreckung des Bandes einen spitzen Winkel einschließende Zone gelegt wird. Falls erwünscht, können die Zonen auch (nicht dargestellt) im wesentlichen spiralförmig in Umfangsrichtung des Bandes gelegt werden, wobei das Laserschweißgerät mit außerordentlich geringer Geschwindigkeit quer zur Längserstreckung des Bandes bewegt wird. Das Laserschweißgerät 9 kann auch bei einer gesamten Umdrehung des Bandes ortsfest angeordnet sein und erst bei Schließen der wärmebeeinflußten Zone das Laserschweißgerät um einen Schritt quer zur Längserstreckung des Bandes bewegt werden. Eine derartige Vorrichtung erlaubt jedenfalls eine gleichmäßige hitzemäßige Beaufschlagung der Oberfläche des Bandes, so daß die Inhomogenitätsstelle der Schweißnaht kompensiert, wenn nicht sogar überhaupt aufgehoben, wird.

Bei dem in Fig. 2 im Schnitt dargestellten Stahlband aus einem austenitischen oder martensitischen Stahl sind parallel zur Schweißnaht 4 die wärmebeeinflußten Zonen 10 angeordnet. Das Stahlband weist eine Dicke d₁ von 1,2 mm auf, wohingegen die Dicke d₂ der wärmebeeinflußten Zonen 0.5 mm beträgt. Die Schweißnaht 4, welche mit einem Nd-Yag Laser mit 800 Watt Wärmeaufnahme und unter Bewegung des Schweißkopfes mit 1 m/min durchgeführt wurde, weist einen Einbrand 11 auf, an dem die wärmebeeinflußten Zonen 12 anschließen. Die Zonen 10 der Wärmebeaufschlagung weisen einen Einbrand 13 und wärmebeeinflußte Zonen 14 auf. Je nach Erfordernis können die Zonen auch so eng nebeneinandergelegt werden, daß der Einbrand jeweils überschneidend ist, womit die gesamte Oberfläche und auch eine oberflächennahe Schichte lediglich durch den Einbrand gebildet ist. Obwohl das Stahlband in seinem Querschnitt eine einheitliche chemische Zusammensetzung aufweist, ist eine erste Oberflächenschichte 15 vorgeschen, die eine andere physikalische Zusammensetzung - Kristallstruktur, -größe u. dgl. - aufweist als die zweite Oberflächenschichte 16, die der ersten gegenüberliegt als auch die zwischen diesen beiden vorgesehene Zwischenschichte 17, die ebenfalls keiner hohen Wärmebeaufschlagung unterworfen war. Das Band, welches bereits in der Regel bei der Anfertigung der Schweißnaht poliert ist und lediglich im Bereich derselben egalisiert und poliert werden muß, kann je nach Erfordernis einer anschließenden Wärmebehandiung, um die erwünschte Kornstruktur im Band zu erhalten, unterzogen werden. Es kann beispielsweise einer Wärmebehandlung, z. B. Erwärmung des Bandes auf 1050°C über eine Stunde, um Eigenspannungen aufzuheben, unterzogen werden. Das so erhaltene Band wird einer im nachfolgenden Beispiel beschriebenen Ätzbehandlung unterworfen, wobei das Ätzmittel einen gleichmäßigen Abtrag in Form von Vertiefungen 18 (vgl. Fig. 3) bedingt. Der Materialabtrag erfolgt gleichmäßig, bezogen auf den Einbrand 11 der Schweißnaht sowie den Einbrand 13 der Zonen 10 sowie der wärmebeeinflußten Zonen 12 der Schweißnaht als auch der wärmebeeinflußten Zonen 14 der Zone 10.

### Beispiel 1:

Ein Stahlband aus austenitischem Stahl mit in Gew.-% C: 0,1; Cr: 17,1; Ni: 7,2; Rest Eisen, einer Dicke von 1.9 mm wurde mit einer Querschweißnaht mit einem Nd-Yag Laser versehen. Die Laserschweißeinrichtung wurde mit einer Geschwindigkeit von 1 m/min quer zur Längserstreckung des Stahlbandes bewegt. Die Energieaufnahme betrug 800 Watt. Die Breite des Einbrandes der ohne Schweißzusatzwerkstoffe gefertigten Schweißnaht betrug 2 mm, die Breite der wärmebeeinflußten Zone 0,5 mm. Parallel zu dieser Schweißnaht wurde die Oberfläche des Stahlbandes mit dem Strahl eines CO₂ Lasers beaufschlagt, wobei der Laser mit 0,75 m/min quer bewegt wurde und eine Energieaufnahme von 1.000 Watt aufwies. Die Energiedichte pro Flächeneinheit war geringer als bei dem Schweißvorgang Die Tiefe des Einbrandes betrug ca. 0,2 mm, wohingegen die wärmebeeinflußte Zone eine Dicke, bezogen auf die Gesamtdicke des Bleches, von ca. 50 % aufwies. Das so erhaltene Stahlband wurde mit einer Geschwindigkeit von 50 cm/h durch ein saures Ätzbad mit FeCl₃ bewegt. Es konnte ein gleichmäßiger Ätzvorgang erreicht werden, so daß bei einem anschließenden Prägvorgang mit einem mit Melaminharz beschichteten Substrat keine Störstellen im Bereich der ursprünglichen Schweißnaht ersichtlich wurden.

### Beispiel 2:

Ein Stahlband aus martensitischem Stahl mit in Gew.-% C: 0,03: Cr: 15,3: Ni: 4,9: Cu: 3,4: Rest Eisen und einer Dicke von 1,9 mm wurde in analoger Weise zu Beispiel 1 geschweißt, die Oberfläche mit einem CO₂ Laser wärmebeaufschlagt und anschließend mit einem saurem Ätzbad mit FeCl₃ geätzt. Es wurde analog zu Beispiel 1 vor dem Ätzvorgang kein Film aufgebracht, so daß an die Homogenität der Oberfläche besonders große Anforderungen gestellt sind. Der Bereich der Schweißnaht war in beiden Fällen nicht mehr von den anderen Bereichen bzw. Zonen der Wärmebeaufschlagung durch den Laser zu unterscheiden.

### Beispiel 3:

Ein weiteres Stahlband gemäß Beispiel 1 mit einer Querschweißnaht wurde mit einem Laser beaufschlagt, wobei die Relativbewegung des CO₂ Lasers nicht am gesamten Stahlblech durchgeführt, sondern nur im Bereich der Querschweißnaht durchgeführt wurde. Die Führung des Lasers quer zur Schweißnaht erfolgt wellenförmig, mäanderförmig od. dgl. Jegliche Gleichmäßigkeit bei dieser Querbewegung wurde vermieden. Das Band wurde sodann eine Stunde lang bei 1.050°C lösungsgeglüht, sodann mit einer lichtempfindlichen Beschichtung versehen, mit einer fotographische Aufnahme von Holzmaserungen beschichtet und anschließend gespült, so daß die zu ätzenden Bereiche, welche Vertiefungen darstellen sollen, als blanke Metalloberflächen vorgelegen sind. Das Band wurde sodann mit einer Geschwindigkeit von 50 cm/h durch eine saure Eisen-111-chloridlösung bewegt. Das so erhaltene geätzte Prägeband wies optisch eine vollkommen gleichmäßige Ätzung auf. Es konnten keine optischen Bereiche festgestellt werden, die auf das Bestehen einer Schweißnaht hinwiesen. Eine Pressung einer mit Melamin beschichteten Platte ergab ein Produkt, das keine Störung des Erscheinungsbildes im Preßbereich der Quernaht aufwies.

Der Laser kann entweder über die Zeit betrachtet einen Laserstrahl mit gleichbleibender Energie abgeben oder es kann der Laserstrahl gepulst werden, so daß punktförmige Wärmebeaufschlagungen der Oberfläche vorliegen, wobei die Punkte entweder diskret nebeneinander oder in sich übergehend angeordnet sein können.

Sowohl zur Schweißung als auch zur Wärmebeaufschlagung können unterschiedlichste Vorrichtungen, wie beispielsweise Einrichtungen zum Elektronenstahlschweißen, Lichtbogenschweißen, autogenes Schweißen od. dgl. eingesetzt werden, unter der Voraussetzung, daß die erforderlichen Energiedichten vorliegen.

## Patentansprüche

1. Endloses Stahlband (1), insbesondere aus austenitischem und/oder martensitischem Stahl, mit zumindest einer Schweißnaht (4), die quer zur Längserstreckung (a) des Stahlbandes (1) verläuft, für Doppelbandpressen mit zumindest einer ersten, sich vorzugsweise im wesentlichen über das gesamte Stahlband (1) erstreckenden, Oberflächenschichte (15). welche eine unterschiedliche Zusammensetzung gegenüber einer zwischen der ersten (15) und einer zweiten (16) dieser gegenüberliegenden Oberfläche sich im wesentlichen über das gesamte Stahlband erstreckende Zwischenschichte (17) aufweist, ***dadurch gekennzeichnet*, daß** die erste Oberflächenschichte (15) aus dem Stahl des Stahlbandes (1) gebildet ist und insbesondere regelmäßig, nebeneinanderliegende und/oder einander überschneidende wärmebeeinflußte Bereiche, z. B. Zonen (14) und/oder Einbrandbereiche, z. B. Zonen (13), aufweist.

2. Endloses Stahlband nach Anspruch 1, **dadurch gekennzeichnet, daß** die wärmebeeinflußten Bereiche (14) bzw. die Einbrandbereiche (13) sich zwischen einem Zehntel bis zur Hälfte der Dicke (d₁) des Stahlbandes (1) erstrecken.

3. Endloses Stahlband nach Anspruch 1 oder 2, **dadurch gekennzeichnet, daß** die Schichtdicken der wärmebeeinflußten Bereiche (14) und/oder Einbrandbereiche (13), bezogen auf die durchlaufend zweite Oberfläche (16), variierend ist, wodurch eine Strukturierung, z. B. einer Holzmaserung, gebildet ist.

4. Endloses Stahlband nach einem der Ansprüche 1, 2 oder 3, **dadurch gekennzeichnet, daß** die erste Oberflächenschichte (15) ausschließlich durch wärmebeeinflußte Bereiche (12, 14) und/oder Einbrandbereiche (11, 13) gebildet ist.

5. Endloses Stahlband nach einem der Ansprüche 1 bis 4, **dadurch gekennzeichnet, daß** die Schweißnaht (4) aus dem Material des Stahlbandes (1) und frei von Zusatzschweißwerkstoffen aufgebaut ist.

6. Verfahren zur Oberflächenstrukturierung eines endlosen, insbesondere austenitischen und/oder martensitischen, Stahlbandes, wobei die Enden eines Stahlbandes durch ein Verbindungsschweißen miteinander verbunden werden und eine erste eben erstreckbare Oberflächenschichte, die sich vorzugsweise im wesentlichen über das gesamte Stahlband erstreckt, mit einer unterschiedlichen Zusammensetzung gegenüber einer sich über das gesamte Stahlband erstreckenden Zwischenschichte, die zwischen der ersten und einer zweiten der ersten gegenüberliegenden sich ebenfalls im wesentlichen über das gesamte Stahlband erstreckenden Oberflächenschichte gebildet wird, wobei die erste anschließend zumindest teilweise abgetragen wird, ***dadurch gekennzeichnet*, daß** die erste sich im wesentlichen eben erstreckbare Oberflächenschichte einer, insbesondere einer Schweißung entsprechenden, Wärmebeaufschlagung mit einer zum Stahlband, z. B. zeilenförmig, relativbewegten Wärmebehandlungseinrichtung, insbesondere Schweißeinrichtung insbesondere nach dem Verbindungsschweißen der Enden unterzogen wird.

7. Verfahren nach Anspruch 6, **dadurch gekennzeichnet, daß** die Wärmebeaufschlagung und vorzugsweise die Schweißung mit einem Laser, insbesondere einem Nd-Yag Laser erfolgt.

8. Verfahren zur Oberflächenstrukturierung nach Anspruch 6 oder 7, **dadurch gekennzeichnet, daß** das Verbindungsschweißen mit einer höheren Energiedichte pro Flächeneinheit als die Wärmebeaufschlagung zur Bildung der wärmebeeinflußten Zonen und/oder Einbrandzonen durchgeführt wird.

9. Verfahren zur Oberflächenstrukturierung nach Anspruch 6, 7 oder 8, **dadurch gekennzeichnet, daß** die Wärmebeaufschlagung mäanderförmig mit Zeilen quer zur Längsrichtung des Stahlbandes durchgeführt wird.

10. Verfahren zur Oberflächenstrukturierung nach einem der Ansprüche 6 bis 9, **dadurch gekennzeichnet, daß** das Stahlband geschweißt, wärmebeaufschlagt und anschließend wärmebehandelt, insbesondere lösungsgeglüht wird.

11. Verfahren zur Oberflächenstrukturierung nach einem der Ansprüche 6 bis 10, **dadurch gekennzeichnet, daß** das Stahlband oberflächenbehandelt, insbesondere geschliffen, anschließend geschweißt, sodann die Schweißnaht gegebenenfalls mechanisch nachgearbeitet und anschließend geschliffen wird, worauf die Wärmebeaufschlagung durchgeführt wird.

## Claims

1. Endless steel band (1), in particular of austenitic and/or martensitic steel, with at least one weld seam (4) running transversely to the longitudinal extension (a) of the steel band (1), for twin-band presses with at least a first surface layer (15) which preferably extends essentially over the entire steel band (1) and exhibits a different composition to an intermediate layer (17) essentially extending over the entire steel band between the first surface layer (15) and a second surface layer (16) facing the latter, **characterised in that** the first surface layer (15) is formed of the steel of the steel band (1) and in particular exhibits regularly adjoining and/or intersecting heat-affected regions, e.g. zones (14), and/or fusion penetration regions, e.g. zones (13).

2. Endless steel band according to claim 1, **characterised in that** the heat-affected regions (14) and the fusion-penetration regions (13) extend over between a tenth to a half of the thickness (d₁) of the steel band (1).

3. Endless steel band according to claim 1 or 2, **characterised in that** the thicknesses of the layers of the heat-affected regions (14) and/or fusion-penetration regions (13), related to the continuous second surface layer (16), are variable, forming texturing, e.g. a wood grain effect.

4. Endless steel band according to one of claims 1, 2 or 3, **characterised in that** the first surface layer (15) is formed exclusively by heat-affected regions (12, 14) and/or fusion-penetration regions (11, 13).

5. Endless steel band according to one of claims 1 to 4, **characterised in that** the weld seam (4) is composed of the material of the steel band (1) and free of additional welding materials.

6. Method for surface texturing of an endless, in particular austenitic and/or martensitic steel band, in which the ends of a steel band are joined to one another by a junction weld and a first surface layer which can be extended flat and preferably extends essentially over the entire steel band is formed with a different composition to an intermediate layer which extends over the entire steel band and is formed between the first surface layer and a second surface layer facing the first and also extending essentially over the entire steel band, and in which the first is then at least partly removed, **characterised in that** the first surface layer which can essentially be extended flat, is exposed to the action of heat, in particular corresponding to welding, with a heat-treatment apparatus, in particular a welding apparatus moved relative to the steel band, e.g. in a line, in particular after the junction welding of the ends.

7. Method according to claim 6, **characterised in that** the exposure to the action of heat and preferably the welding are effected with a laser, in particular an Nd-Yag laser.

8. Method for surface texturing according to claim 6 or 7, **characterised in that** the junction welding is carried out with a higher energy density per unit area than the exposure to the action of heat to form the heat-affected zones and/or fusion-penetration zones.

9. Method for surface texturing according to claim 6, 7 or 8, **characterised in that** the exposure to the action of heat is effected in a meandering fashion with lines transversely to the longitudinal direction of the steel band.

10. Method for surface texturing according to one of claims 6 to 9, **characterised in that** the steel band is welded, exposed to the action of heat and then heat-treated, in particular solution annealed.

11. Method for surface texturing according to one of claims 6 to 10, **characterised in that** the steel band is surface-treated, in particular ground, then welded, and then the weld seam if necessary is reworked mechanically and then ground, whereupon the exposure to the action of heat is carried out.

## Revendications

1. Bande d'acier sans fin (1), en particulier en acier austénitique et/ou martensitique, comportant au moins un joint de soudure (4), qui s'étend transversalement à l'extension longitudinale (a) de la bande d'acier (1), pour des presses à double bande, ayant au moins une première couche superficielle (15) qui s'étend de préférence sensiblement sur la totalité de la bande d'acier (1) et qui présente une composition différente par rapport à une couche intermédiaire (17) qui s'étend sensiblement sur la totalité de la bande d'acier entre la première couche superficielle (15) et une deuxième surface (16) située à l'opposé de celle-ci, **caractérisée en ce que** la première couche superficielle (15) est formée de l'acier de la bande d'acier (1) et **en ce qu'**elle présente des régions influencées par la chaleur qui, en particulier de manière régulière, sont situées l'une à côté de l'autre et/ou se recoupent, par exemple des zones (14), et/ou des régions de pénétration, par exemple des zones (13).

2. Bande d'acier sans fin suivant la revendication 1, **caractérisée en ce que** les régions influencées par la chaleur (14) et respectivement les régions de pénétration (13) s'étendent entre un dixième jusqu'à la moitié de l'épaisseur (d₁) de la bande d'acier (1).

3. Bande d'acier sans fin suivant l'une des revendications 1 et 2, **caractérisée en ce que** les épaisseurs de couche des régions influencées par la chaleur (14) et/ou des régions de pénétration (13) varient par rapport à la deuxième surface (16) continue, ce qui permet de former une structuration, par exemple une madrure.

4. Bande d'acier sans fin suivant l'une des revendications 1, 2 et 3, **caractérisée en ce que** la première couche superficielle (15) est formée exclusivement de régions influencées par la chaleur (12, 14) et/ou de régions de pénétration (11, 13).

5. Bande d'acier sans fin suivant l'une des revendications 1 à 4, **caractérisée en ce que** le joint de soudure (4) est constitué à base de la matière de la bande d'acier (1) et est exempt de matériaux de soudure d'apport.

6. Procédé de structuration de surface d'une bande d'acier sans fin, en particulier austénitique et/ou martensitique, dans lequel les extrémités d'une bande d'acier sont mutuellement reliées par une soudure de liaison, une première couche superficielle, qui peut s'étendre de manière unie et s'étend de préférence sensiblement sur la totalité de la bande d'acier, présentant une composition différente par rapport à une couche intermédiaire qui s'étend sur la totalité de la bande d'acier et qui est formée entre la première couche superficielle et une deuxième couche superficielle qui s'étend également sensiblement sur la totalité de la bande d'acier et qui est située à l'opposé de la première, la première couche étant ensuite au moins partiellement enlevée, **caractérisé en ce que** la première couche superficielle, qui peut s'étendre de manière sensiblement unie, est soumise à une sollicitation thermique, qui correspond en particulier à une soudure, à l'aide d'un dispositif de traitement thermique, en particulier un dispositif de soudure, qui est déplacé de manière relative par rapport à la bande d'acier, par exemple en forme de lignes, en particulier selon le soudage de liaison des extrémités.

7. Procédé suivant la revendication 6, **caractérisé en ce que** la sollicitation thermique et de préférence la soudure est effectuée à l'aide d'un laser, en particulier d'un laser Nd-Yag.

8. Procédé de structuration de surface suivant l'une des revendications 6 et 7, **caractérisé en ce que** la soudure de liaison est effectuée à une densité d'énergie par unité de surface qui est supérieure à la sollicitation thermique destinée à la formation des zones influencées par la chaleur et/ou des zones de pénétration.

9. Procédé de structuration de surface suivant l'une des revendications 6, 7 et 8, **caractérisé en ce que** la sollicitation thermique est effectuée en méandres avec des lignes transversalement à la direction longitudinale de la bande d'acier.

10. Procédé de structuration de surface suivant l'une des revendications 6 à 9, **caractérisé en ce que** la bande d'acier est soudée, thermiquement sollicitée et ensuite thermiquement traitée, en particulier soumise à un recuit de mise en solution.

11. Procédé de structuration de surface suivant l'une des revendications 6 à 10, **caractérisé en ce que** la bande d'acier est traitée en surface, en particulier polie, ensuite soudée, le cordon de soudure étant ensuite éventuellement mécaniquement ultérieurement traité et puis poli, après quoi la sollicitation thermique est effectuée.
